# EUROPEAN PATENT APPLICATION

(11) **EP 2 620 083 A1**
(43) Date of publication of application: **31.07.2013**
(21) Application number: 11826342.5
(22) Date of filing: 13.05.2011
(51) Int. Cl.: A47J 19/02, F16L 15/00

(54) **SEALING STRUCTURE OF JUICE EXTRACTOR**

(30) Priority: 26.09.2010 CN 201020542484 U
(71) Applicant: Tsann Kuen (Zhangzhou) Enterprise Co., Ltd., Fujian 363000 (CN)
(72) Inventor: LEE, Hei-Wang, Tainan City Taiwan (TW)
(74) Representative: Verscht, Thomas Kurt Albert
(86) International application number: PCT/CN2011/074024
(87) International publication number: WO 2012/037815

(57) **Abstract**

A sealing structure of a juice extractor comprises a cup (1), a cup base (2) and an annular sealing ring (3). An external thread (11) is arranged on the outer peripheral wall of the bottom of the cup (1). An internal thread (22) matching with the external thread (11) is arranged on the inner peripheral wall of the upper end of the cup base (2). The inner wall below the thread is provided with a thread supplement area (23) along a circumference; the wall of the thread supplement area (23) is an unthreaded smooth surface and is gradually inclined outwards from bottom to top. The annular sealing ring (3) is mounted between the bottom of the cup (1) and the cup base (2); a part of the side wall of the sealing ring matches with a part of the lower section of an inclined surface of the thread supplement area (23) on the inner wall of the cup base (2).

## Description

### Field of the invention

The present invention relates to a juice machine, especially to a sealing structure for a juice machine.

### Background of the invention

The structure of the traditional juice machine with heating function is disposed with a cup and a cup base combined together, it further comprising a waterproof ring (sealing ring), a cup base, a cutter holder (including a heating pan and a cutter set). The cutter holder is fixed to the cup base, the waterproof ring (sealing ring) is disposed between the cutter holder and the juice cup for sealing to prevent liquid outflowing from the juice cup. The juice cup of existing technology does not overflow, but during usage, some liquid will flow to the thread of the cup and the cup base along the outer of the cup wall. As the thread is not smooth, there is clearance between the thread and the side surface of the sealing ring, liquid will flow to the clearance of the safety switch along the thread then to the charged body of the heating pan, leading to electrical faults.

### Summary of the invention

The object of the present invention is to provide with a sealing structure for a juice machine, which solves the above problem of the existing technology.

The technical proposal of the present invention is as below:
A sealing structure for a juice machine comprising:
   A cup body, the outer periphery of the bottom of which is disposed with external thread;
   A cup base, the inner periphery of the upper of which is disposed with internal thread coupled to the external thread, a loop of complement thread area is disposed at the inner wall of the cup base below the internal thread in a circle, the wall of the complement thread area is an unthreaded smooth surface and outward-inclined gradually from down to up;

An annular sealing ring, which is assembled between the bottom of the cup body and the cup base, one part of the side wall of the sealing ring is coupled to one part at the lower section of the inclined surface of the complement thread area of the inner wall of the cup base.

In another preferred embodiment, the sealing ring is of symmetry up and down, the lower part of the wall of the complement thread area is coupled to the lower part of the sealing ring in shape.

In another preferred embodiment, the lower part of the wall of the complement thread area is a straight inclined surface, the angle of outward-inclination bottom to up from the vertical line ranges from 0.1 to 60 degrees, the angle of inclination of lower part of the side wall of the sealing ring is the same as that of the lower part of the wall of the complement thread area.

In another preferred embodiment, the lower part of the wall of the complement thread area is a curved inclined surface, the lower part of the side wall of the sealing ring is a curved inclined surface coupled to the lower part of the wall of the complement thread area.

In another preferred embodiment, the lower part of the wall of the complement thread area is inclined surface of multi sections, the lower part of the side wall of the sealing ring is inclined surface of multi sections coupled to the lower part of the wall of the complement thread area. In another preferred embodiment, the height of the wall of the complement thread area is equal to the height of the sealing ring.

In another preferred embodiment, the height of the wall of the complement thread area is less than the height of the sealing ring.

As can be seen from the above, the cup base of the juice machine of the present invention is disposed with a loop of complement thread area in a circle to couple to one part of the side wall of the sealing ring. So that sealing is well at the top and bottom surface after the cup body is locked to the cup base, and the side wall of the cup base is sealing well to the sealing ring, making it a tri-side sealing. The present invention totally prevents the overflowing problems. The wall of the complement thread area of the present invention is inclined bottom to top outwards gradually, which is convenient for the sealing ring to put in from up to down. The sealing ring is of symmetry up and down, making it easily placed from any side with ignoring the assembly direction problem.

Above all, the sealing structure is improved to prevent leaking. It averts the potentially dangerous when used daily. Meanwhile, it keeps cleaning on the top surface of the machine by preventing the overflowing of liquid.

### Brief description of the drawings

Fig.1 illustrates the breakdown structure of a juice machine with a sealing structure of the present invention.
Fig.2 illustrates the sectional view of the cup base of the first embodiment of the present invention.
Fig.3 illustrates the enlargement view of the A part of the fig.2.
Fig.4 illustrates the enlargement view of the B frame of the fig.3.
Fig.5 illustrates the enlargement view of the B part of the fig.4.
Fig.6 is the same as the fig.2.
Fig.7 illustrates the enlargement view of the C part of the fig.6.
Fig.8 illustrates the sectional view of the sealing ring of the first embodiment of the present invention.
Fig.9 illustrates the sectional view of the D part of the fig.8.
Fig.10 illustrates the composite structure of a juice machine with a sealing structure of the present invention.
Fig.11 illustrates the enlargement view of the E part of the fig.10.
Fig.12 illustrates the sectional view of the sealing ring of the second embodiment of the present invention.

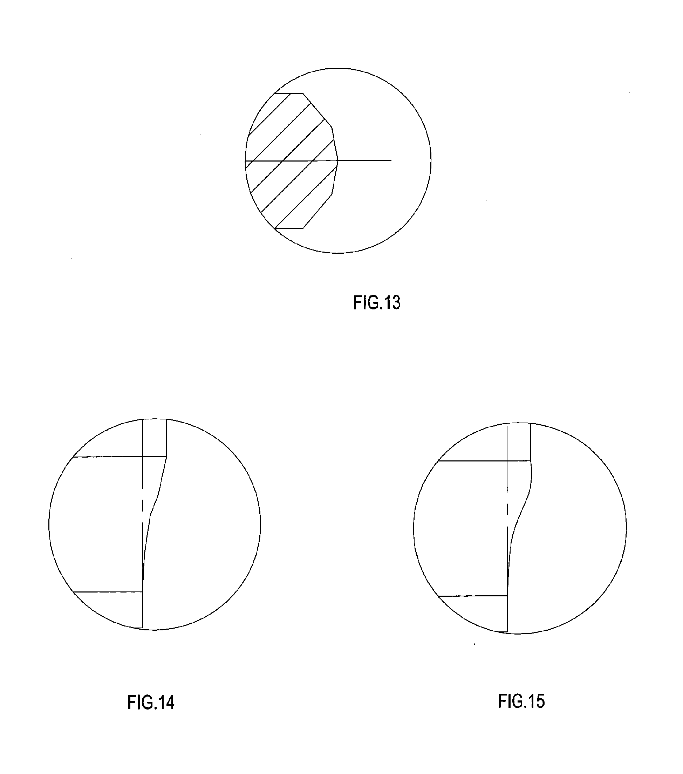

Fig.13 illustrates the enlargement view of the F part of the fig.12.
Fig.14 illustrates the enlargement view of the wall of the complement thread area of the third embodiment of the present invention.
Fig.15 illustrates the enlargement view of the wall of the complement thread area of the fourth embodiment of the present invention.

### Detailed description of the embodiments

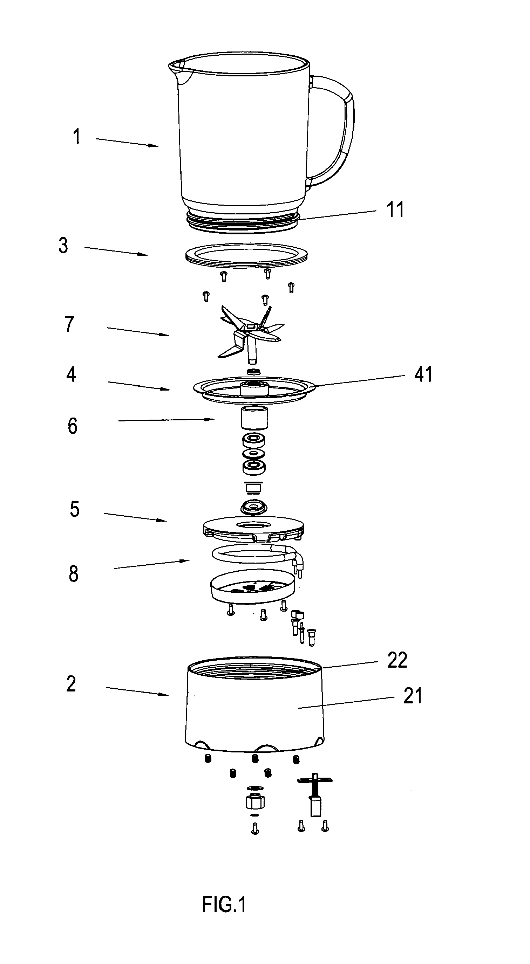

The first embodiment of the present invention, as figured in the fig.1, is provided with a juice machine with heating function, which is disposed with a cup body 1 and a cup base 2. The outer periphery of the bottom of the cup body 1 is disposed with external thread 11, the top of the inner wall of the cup base 2 is disposed with internal thread coupled to the external thread 11 at the outer periphery of the bottom of the cup body 1. A plate ring 4 is supported below the internal thread of the cup base 2, the plate ring 4 is disposed with a base plate 5 inside, a cutter holder 6 is disposed in the central of the base plate 5, the cutter holder 6 is assembled with cutter 7, the cutter is raised on the bottom inside cup body. A heating element 8 is disposed at the bottom of the base plate 5 to heat.

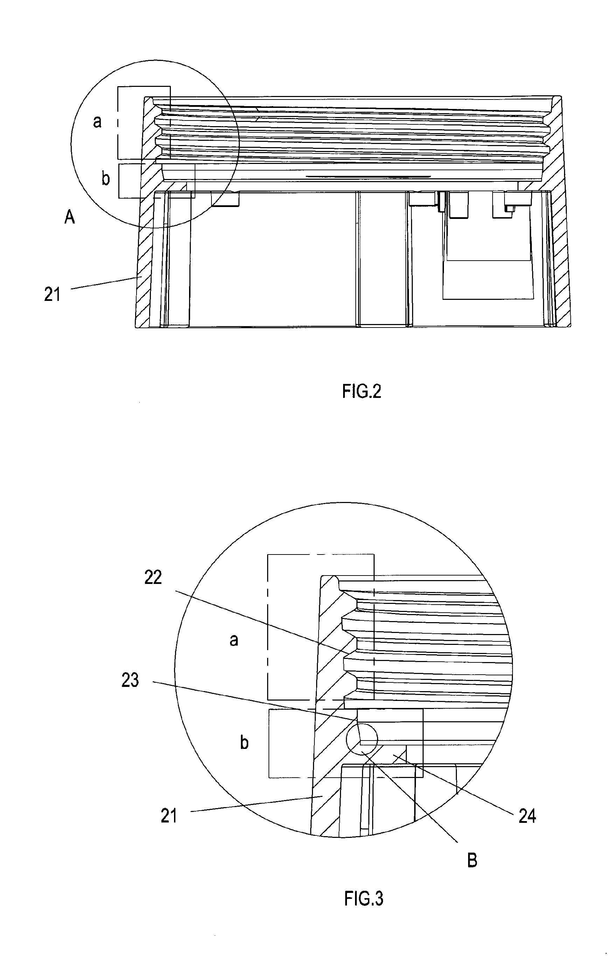

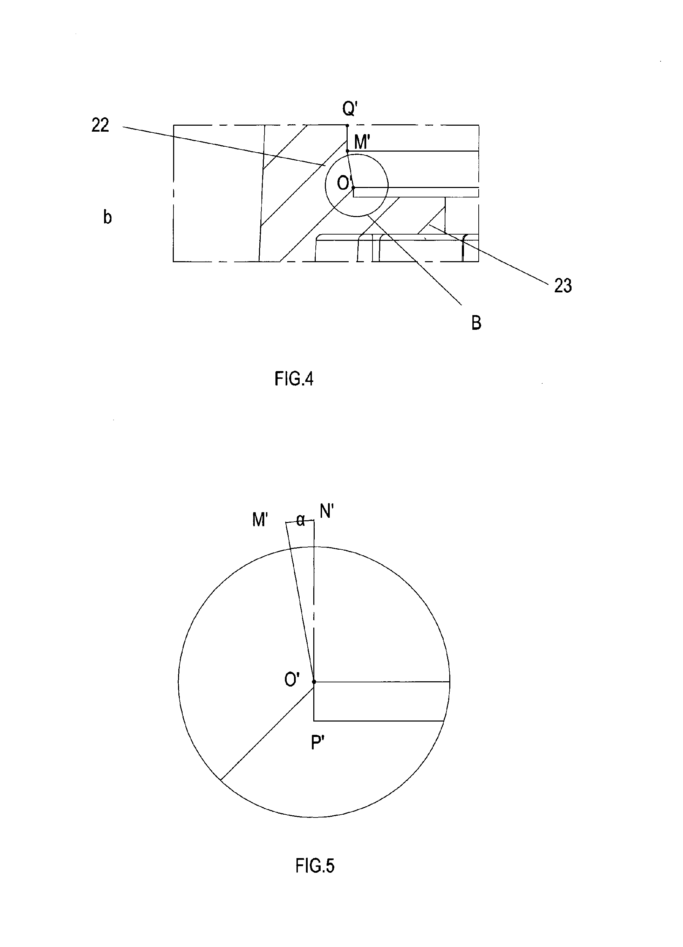

Refer to the fig.2 to fig.5. The upper of the inner wall 21 of the cup base 2 is disposed with upper thread area 22 (as figured in A frame in the fig.3) and lower complement thread area 23 (as figured in B frame in the fig.3), the thread area 22 is disposed with internal thread coupled to the external thread 11 of the wall at the bottom of the cup body 1, the complement thread area 23 is an area coupled to the sealing ring 3, the inner wall is unthreaded. The height of the complement thread area is equal to or less than the height of the sealing ring 3. An inner raised 24 is extended from the inner wall below the thread area 22, the inner raised 24 is disposed to support the flange 41 of the plate ring 4. the left inner wall of the cup base above the inner raised 24 is kept with a distance OP to receive the flange 41 of the plate ring 4. the inner wall of the cup body above the OP is inclined from down to up outwards, the included angle α between the lowest section of the inclined section O'M' and the vertical direction O'N' is 10 degrees. The included angle between the upper inclined section M'Q' and the vertical direction is 5 degrees.

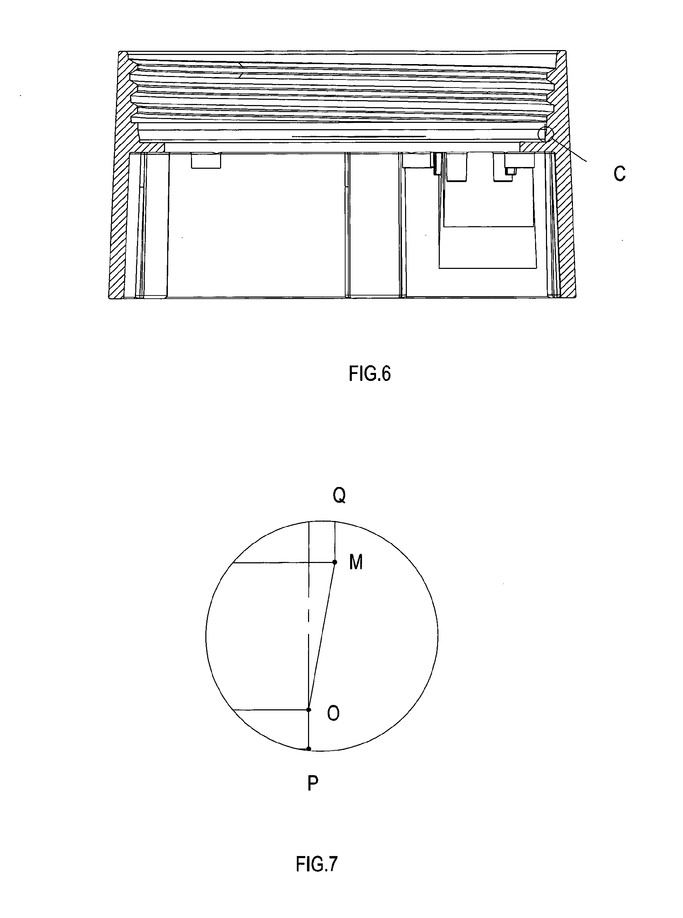

Fig.6 and fig.7 are the structure of the right inner wall of the complement thread area, which is of symmetry with the left inner wall of the cup base, the included angle between the inclined section OM and the vertical direction ON is 10 degrees; the included angle between the upper inclined section MQ and the vertical section is 5 degrees.

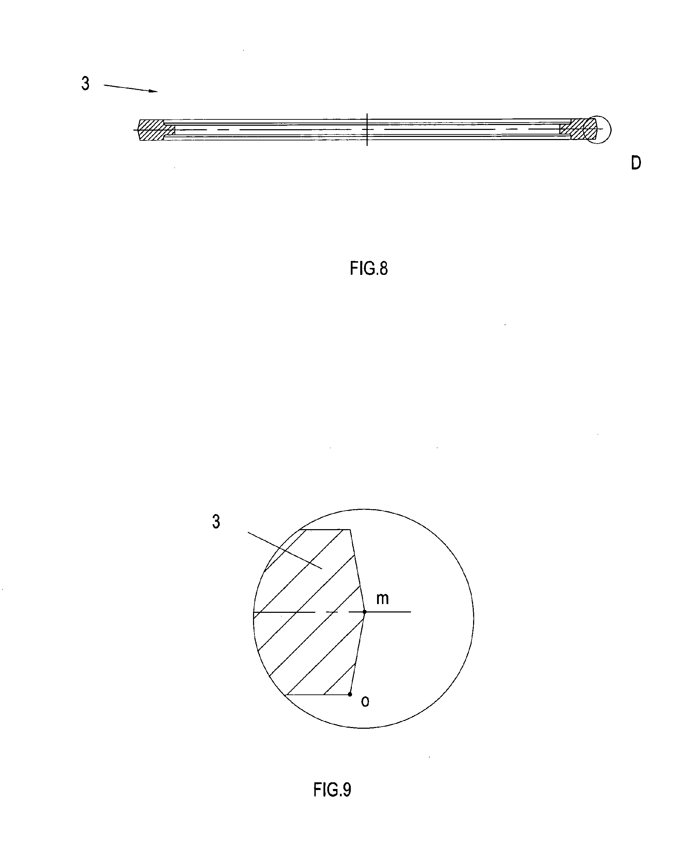

Refer to the fig.8 and fig.9, the sealing ring 3 is of symmetry up and down along the horizontal line, the included angle between the lower part om at the edge of the outer side and the vertical direction is 10 degrees.

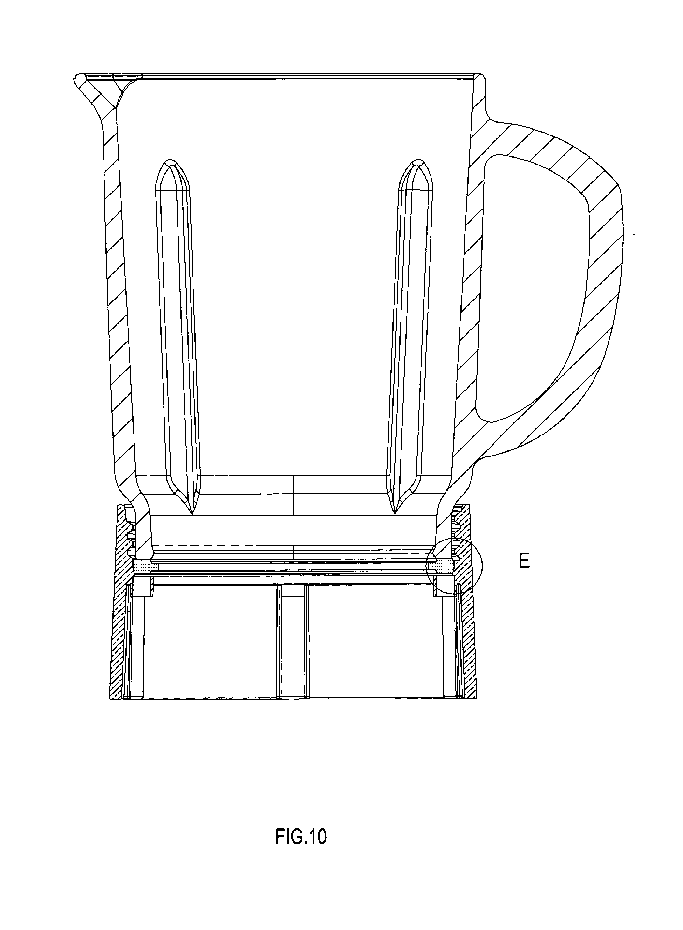

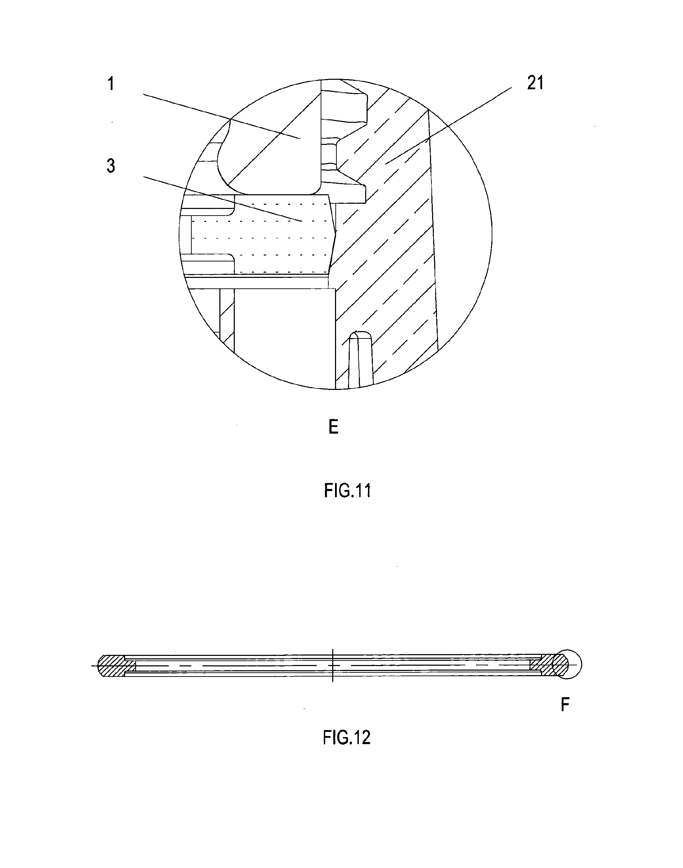

Refer to the fig.10 and fig. 11, When assembling, firstly put the sealing ring 3 into the cup base 2, then rotate the bottom of the cup body 1 into the cup base 2. As the top surface of the sealing ring is contacted to the bottom of the cup body tightly, the bottom surface of the sealing ring is contacted to the top surface of the plate ring 4 tightly, the inclined angle of the lower part om of the side surface is equal to the inclined angle of the lower section OM of the complement thread area of the cup base, the side surface of the sealing ring 3 is contacted to the side surface of the cup base 3. Pressed by the cup body and the cup base from up to bottom, the sealing ring deforms slightly, making the side surface of the sealing ring contacted to the side surface of the cup base more tightly. Tri-side sealing forms from the inner wall of the cup base, the sealing ring and the bottom of the cup body. So that liquid will not outflow from the inner wall of the cup base and the side surface of the bottom of the cup body. Sealing inside cup base is achieved.

The second embodiment:
In this embodiment, the sealing structure of the juice machine includes a cup body 1 and a cup base 2 as well, the basal structure is similar to the first embodiment. Different from the first embodiment, the sealing ring 3 is also of symmetry up and down, but the lower part is not applied with a continuous inclined line but two inclined lines with different inclined angle up and down and they are inclined outwards. The inner wall of the cup base 2 is correspondingly disposed with two inclined lines coupled to the lower part of the sealing ring 3.

The third embodiment:
In this embodiment, the sealing structure of the juice machine includes a cup body 1 and a cup base 2 as well; the basal structure is similar to the first embodiment. Different from the first embodiment, the wall of the complement thread area is not applied with a continuous inclined line but four inclined lines with different inclined angle and they are inclined outwards. The lower part of the side wall of the sealing ring 3 is correspondingly disposed with multi sections of inclined lines coupled to the lower part of the wall of the complement thread area.

The fourth embodiment:
In this embodiment; the sealing structure of the juice machine includes a cup body 1 and a cup base 2 as well; the basal structure is similar to the first embodiment. Different from the first embodiment, the wall of the complement thread area is not applied with a continuous inclined line but a smooth curved line inclined outwards. The lower part of the side wall of the sealing ring 3 is correspondingly disposed with a smooth curved line coupled to the lower part of the wall of the complement thread area.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

### Industrial applicability

The present invention is provided with a sealing structure for a juice machine, in which sealing is well at the top and bottom surface after the cup body is locked to the cup base, and the side wall of the cup base is sealing well to the sealing ring, making it a tri-side sealing. The present invention totally prevents liquid flowing into the machine along the thread between the cup base and the cup body.

## Claims

1. A sealing structure for a juice machine, wherein comprising:
A cup body, the outer periphery of the bottom of which is disposed with external thread;
A cup base, the inner periphery of the upper of which is disposed with internal thread coupled to the external thread, a loop of complement thread area is disposed at the inner wall of the cup base below the internal thread in a circle, the wall of the complement thread area is an unthreaded smooth surface and outward-inclined gradually from down to up;
An annular sealing ring, which is assembled between the bottom of the cup body and the cup base, one part of the side wall of the sealing ring is coupled to one part at the lower section of the inclined surface of the complement thread area of the inner wall of the cup base.

2. A sealing structure for a juice machine according to claim 1, wherein the sealing ring is of symmetry up and down, the lower part of the wall of the complement thread area is coupled to the lower part of the sealing ring in shape.

3. A sealing structure for a juice machine according to claim 1 or claim 2, wherein the lower part of the wall of the complement thread area is a straight inclined surface, the angle of outward-inclination bottom to up from the vertical line ranges from 0.1 to 60 degrees, the angle of inclination of lower part of the side wall of the sealing ring is the same as that of the lower part of the wall of the complement thread area.

4. A sealing structure for a juice machine according to claim 1 or claim 2, wherein the lower part of the wall of the complement thread area is a curved inclined surface, the lower part of the side wall of the sealing ring is a curved inclined surface coupled to the lower part of the wall of the complement thread area.

5. A sealing structure for a juice machine according to claim 1 or claim 2, wherein the lower part of the wall of the complement thread area is inclined surface of multi sections, the lower part of the side wall of the sealing ring is inclined surface of multi sections coupled to the lower part of the wall of the complement thread area.

6. A sealing structure for a juice machine according to claim 1 or claim 2, wherein the height of the wall of the complement thread area is equal to the height of the sealing ring.

7. A sealing structure for a juice machine according to claim 1 or claim 2, wherein the height of the wall of the complement thread area is less than the height of the sealing ring.
